# EUROPÄISCHE PATENTSCHRIFT

(11) **EP 1 037 946 B1**
(45) Veröffentlichungstag und Bekanntmachung des Hinweises auf die Patenterteilung: **19.12.2001**
(21) Anmeldenummer: 98955431.6
(22) Anmeldetag: 12.10.1998
(51) Int. Cl.: C08L 83/07, C08K 3/22

(54) **ADDITIONSVERNETZENDE SILICONKAUTSCHUKMISCHUNGEN, EIN VERFAHREN ZU DEREN HERSTELLUNG UND DEREN VERWENDUNG**
ADDITION CROSS-LINKING SILICONE RUBBER MIXTURES, A METHOD FOR THEIR PRODUCTION AND THEIR USE
MELANGES DE CAOUTCHOUC SILICONE RETICULANT PAR ADDITION, PROCEDE PERMETTANT DE LES PREPARER ET LEUR UTILISATION

(43) Veröffentlichungstag der Anmeldung: 27.09.2000
(73) Patentinhaber: GE Bayer Silicones GmbH & Co. KG, 40699 Erkrath (DE)
(72) Erfinder: VOIGT, Tilman, D-51377 Leverkusen (DE); MROZEK, Alfons, D-51381 Leverkusen (DE)
(86) Internationale Anmeldenummer: EP9806445
(87) Internationale Veröffentlichungsnummer: WO0022047

(56) Entgegenhaltungen:
- EP-A- 0 787 772
- WO-A-97/35326
- DE-A- 3 048 207
- DE-A- 3 831 478

## Beschreibung

Die vorliegende Erfindung betrifft additionsvemetzende Siliconkautschuke, ein Verfahren zu deren Herstellung und deren Verwendung.

Additionsvernetzende Siliconkautschuke zeichnen sich durch einen breiten Einsatzbereich aus. Dazu gehören z.B. auch die Verwendung als Hochspannungsisolatoren oder Ableitern.

Für diesen Anwendungsbereich ist es notwendig, daß die Organopolysiloxanelastomere eine hohe Lichtbogenfestigkeit und eine hohe Kriechstromfestigkeit bei gleichzeitig guten mechanischen Eigenschaften aufweisen.

Es ist bekannt, daß durch den Zusatz von Aluminiumdioxiden und/oder -hydroxiden die Lichtbogenfestigkeit und Kriechfestigkeit verbessert werden, die mechanische Eigenschaften jedoch relativ schlecht sind. Zudem sind diese Massen aufgrund der hohen Viskosität auf Spritzgußmaschinen nicht verarbeitbar.

Bekannt ist aus DE-A-3 831 478 der Einsatz von addititionsvemetzenden Siliconelastomeren, die neben den oben beschriebenen Extenderfüllstoffen Titandioxid und Zinkoxid enthalten können. Diese Massen können platinkatalysiert vernetzt werden, sie haben jedoch den Nachteil, daß diese im unvernetzten Zustand nicht lagerstabil ist. Aus DE-A-3 048 207 sind zudern flammfeste Massen bekannt, die zusätzlich zu hydratisiertem Aluminiumoxid noch Magnesiumoxid und gegebenenfalls weitere Zusätze, wie z.B. TiO₂, aufweisen.

Die WO 97 35 226 A offenbart Kriechstromfeste Silikonkautschukmischanger, die Magnesium-, Zink- und enthalten.

Diese Massen verfügen jedoch nachteiligerweise über eine geringe Lagerstabilität und eine zu geringe Kriechstromfestigkeit.

Aufgabe der vorliegenden Erfindung war daher die Bereitstellung von kriechstrombeständigen und lichtbogenbeständigen additionsvernetzenden Polysiloxanmassen, die die Nachteile des Standes der Technik nicht aufweisen und in der Spritzgußtechnik verarbeitbar sind.

Es wurde nun gefunden, daß additionsvernetzende Organopolysiloxanmassen, die neben oxidischen Aluminiumverbindungen zusätzlich noch Zinkoxid und gegebenenfalls Titandioxid enthalten, über das gewünschte Eigenschaftsprofil verfügen.

Gegenstand der Erfindung sind daher additionsvernetzende Siliconkautschukmischungen, bestehend im wesentlichen aus
(a) 20 bis 40 Gew.-% mindestens einem alkenylgruppenhaltigen linearen oder verzweigten Organopolysiloxan mit einem Anteil von 0,0002 bis.5 Gew.-% Alkenylgruppen mit einer Viskosität von 0,1 bis 1 000 Pas, bei 25°C
(b) mindestens einem Hydrogensiloxan mit mindestens 3 SiH-Funktionen pro Molekül in einer Menge, so daß das molare Verhältnis der SiH-Gruppen zu der Gesamtmenge an Si-gebundenen Alkenylgruppen mindestens 2,0:1 beträgt,
(c) 0,01 bis 250 ppm mindestens einem Pt-Katalysator und gegebenenfalls einem Inhibitor,
(d) 35-55 Gew.-% Aluminiumhydroxid, -oxid undloder deren Mischoxide/hydroxide,
(e) 5 bis 25 Gew.-% mindestens einem, gegebenenfalls oberflächlich modifizierten Füllstoff mit einer spezifischen Oberflache von 150 bis 500 m²/g
(f) 1 bis 5 Gew.-% mindestens einem Metalloxid des Zinks mit einer BET-Oberfläche von 30 bis 70 m²/g, gegebenenfalls in Kombination mit 0 bis 5 Gew.-% mindestens einem Metalloxid des Titans, mit einer BET-Oberfläche vom 35 bis 65 m²/g
   und gegebenenfalls
(g) weiteren Hilfsstoffen, wobei die Summe aller Bestandteile 100 Gew.-% beträgt.

Der Begriff Organopolysiloxan (a) umfaßt alle bisher in Organopolysiloxanmassen eingesetzten Polysiloxane. Vorzugsweise handelt es sich dabei um ein Siloxan aus Einheiten der allgemeinen Formel (I)

(R)_{y}SiO_{(4-y)/2} (I),

in denen
- R: einen einwertigen aliphatischen Rest mit 1 bis 8 Kohlenstoffatomen und einen Alkylrest mit 2 bis 8 Kohlenstoffatomen bedeutet,
- y: 1,95 bis 2,01 ist, und das mindestens 0,0002 bis 5 Gew.-% Alkenylgruppen enthält.

Vorzugsweise ist (a) dimethylvinylsiloxyendgestoppt.

In einer bevorzugten Ausführungsform der Erfindung weisen die erfindungsgemäßen Organopolysiloxane (a) Viskositäten von 0,01 bis 1 000 Pas, ganz besonders bevorzugt 10 bis 80 Pas auf.

Die Viskositäten werden gemäß DEN 53 019 bei 20°C bestimmt.

Hydrogensiloxane (b) im Sinne der Erfindung sind vorzugsweise lineare, cyclische oder verzweigte Organopolysiloxane aus Einheiten der allgemeinen Formel (II)

(R¹)_{w}(H)_{z}SiO_{(4-w-z)/2} (II),

in denen
- R¹ =: einwertiger aliphatischer Rest mit 1 bis 8 Kohlenstoffatomen,
- w =: 0, 1, 2 oder 3,
- z =: 0, 1 oder 2,
und die Summe w+z = 0, 1, 2 oder 3 ist,
mit der Maßgabe, daß durchschnittlich mindestens 3, vorzugsweise 10 bis 20, Sigebundene Wasserstoffatome je Molekül vorliegen.

Die Hydrogensiloxane (b) besitzen vorzugsweise eine Viskosität von 0,03 bis 1 Pas.

Die Hydrogensiloxane (b) können zusätzlich auch Organopolysiloxane, deren Anzahl an SiH-Gruppen kleiner 3 ist, enthalten.

Katalysatoren (c) für die Vernetzungsreaktion sind vorzugsweise Pt (0)-Komplexe mit Alkenylsiloxanen als Liganden in katalytischen Mengen von 0,01 bis 250 ppm Pt.

Inhibitoren im Sinne der Erfindung sind alle gängigen Verbindungen, die bisher für diesen Zweck eingesetzt wurden. Beispiele für solche bevorzugten Inhibitoren sind z.B. 1,3-Divinyl-tetramethyldisiloxan, 1,3,5,7-Tetravinyl-1,3,5,7-tetramethylcyclotetrasiloxan, 2-Methylbutinol (2) oder 1-Ethinylcyclohexanol in Mengen von 50 bis 10 000 ppm.

Aluminiumhydroxid, -oxid und/oder deren Mischoxide/hydroxide, wie z.B. AlO(OH), sind vorzugsweise solche Verbindungen, die eine BET-Oberfläche von 3 bis 6 m²/g, gemessen über N₂-Absorption, aufweisen.

Füllstoffe (e) im Sinne der Erfindung sind vorzugsweise verstärkende Füllstoffe, wie z.B. pyrogene Kieselsäure mit einer BET-Oberfläche zwischen 50 und 400 m²/g, gemessen über N2-Absorption, die auch oberflächlich behandelt sein können, und/oder Extender-Füllstoffe, wie z.B. Quarzmehl.

Die Obarflächenbehandlung kann auch in situ durch den Zusatz von Silazanen, wie Hexamethylsilazan und/oder Divinyltetramethyldisilazan sowie Vinylalkoxysilanen, wie z.B. Vinyltrimethoxysilan und Wasser oder anderen gängigen Füllstoffbeladungsmitteln erfolgen.

Metalloxide (f) des Zinks sind vorzugsweise solche Verbindungen, die eine BET-Oberfläche von 45 bis 55 m²/g, bzw. des Titans, die eine BET-Oberfläche von 45 bis 55 m²/g, gemessen über N₂-Absorption, aufweisen.

In einer weiteren bevorzugten Ausführungsform der Erfindung enthält die Mischung weitere Hilfsstoffe (g), wie farbgebende, anorganische Pigmente, wie Eisenoxide oder Cobaltspinelle.

Gegenstand der Erfindung ist zudem ein Verfahren zur Herstellung der erfindungsgemäßen additionsvernetzenden Siliconkautschukmischungen, wonach 1, mindestens ein Organopolysiloxan (a), Katalysator (c), Aluminiumhydroxid (d) und Metalloxide (f), gegebenenfalls Füllstoffe (e) und/oder Hilfsstoffe (g) vermischt und 2, als separate Mischung mindestens ein Organopolysiloxan (a), mindestens ein Hydrogensiloxan (b), und gegebenenfalls Füllstoffe (e) und Aluminiumhydroxid (d) Hilfsstoffe (g) und/oder Inhibitor (c) und Metalloxide (f) vermischt, und diese beiden Mischungen erst im Spritzgießautomaten in einem vorgelagerten Mischkopf mit anschließendem Statikmischer zusammengeführt werden.

Das Vermischen erfolgt dabei vorzugsweise mit für hochviskose Materialien geeigneten Mischern, wie z.B. Kneter, Dissolver oder Planetenmischer.

In einer Ausführungsform des erfindungsgemäßen Verfahrens ist der Füllstoff hydrophobiert, wobei die Hydrophobierung vorzugsweise in situ durch die Zugabe von Hexamethyldisilazan und/oder Divinyltetramethyldisilazen und Wasser erfolgt.

Bei der in situ Hydrophobierung werden vorzugsweise Organopolysiloxan (a), Füllstoff (e) und Aluminiumhydroxid (d) und das Hydrophobierungsmittel, vorzugsweise Hexamethyldisilazan und/oder Divinyltetramethyldisilazan, vorzugsweise bei Temperaturen von 90-100°C mindestens 20 Minuten in einem für hochviskose Materialien geeigneten Mischaggregat, wie z.B. einem Kneter, Dissolver oder Planetenmischer, gerührt und anschließend bei T = 150-160°C von überschüssigen Beladungsmitteln und Wasser zunächst bei Normaldruck und dann im Vakuum bei einem Druck von 100 bis 20 mbar befreit. Die weiteren Komponenten (b und f) bzw. (c), (f) und gegebenenfalls (g) werden anschließend über 10 bis 30 Minuten eingemischt.

Gegenstand der Erfindung ist zudem die Verwendung der erfindungsgemäßen additionsvernetzenden Siliconkautschukmischungen zur Herstellung von kricchstrom- und lichtbogenfesten Siliconelastomeren.

Die nachfolgenden Beispiele, in denen alle Teile Gewichtsteile bedeuten, erläutern die Erfindung.

### Ausführungsbeispiele

### Beispiel 1

In einem Dissolver mit Planetengetriebe wurden 75 Gew.-Teile eines vinylendgestoppten Polydimethylsiloxangemisches mit einer mittleren Viskosität von 40 Pa.s bei 25°C (a) mit 10 Gew.-Teilen Hexamethyldisilazan und 5 Gew.-Teilen Wasser gemischt und anschließend mit 31 Gew.-Teilen pyrogen hergestellter Kieselsäure mit einer spezifischen Oberfläche von 300 m²/g nach BET (e), 110 Gew.-Teilen Aluminiumtrihydroxid natriumarm (d) und 2 Gew.-Teilen pyrogen hergestelltem Titandioxid (f) zu einer homogenen Masse verrührt. Die Mischung wurde zunächst auf 100°C erwärmt und 2 Stunden im geschlossenen Dissolver gerührt und danach bei 160°C unter Vakuum von Wasser und überschüssigem Silazan befreit.

Nach Abkühlen der Masse auf 90°C wurden 33 Gew.-Teile eines vinylendgestoppten Polydimethylsiloxangemisches mit einer mittleren Viskosität von 5 Pa.s bei 25°C (a) und 0,05 Gew.-Teils einer Platinkatalysators in Form eines Komplexes von Chlorplatinsäure mit symetrischen Divinyltetramethyldisiloxan und enthaltend 0,15 % Platin (c) zugesetzt. Die so erhaltene Masse wird im folgenden Komponente A genannt.

In einem Dissolver mit Planetengetriebe wurden 75 Gew.-Teile eines vinylendgestoppten Polydimethylsiloxangemisches mit einer mittleren Viskosität von 40 Pa.s bei 25°C (a) mit 10 Gew.-Teilen Hexamethyldisilazan und 5 Gew.-Teilen Wasser gemischt und anschließend mit 32 Gew.-Teilen pyrogen hergestellter Kieselsäure mit einer spezifischen Oberfläche von 300 m²/g nach BET (e), 110 Gew.-Teilen Aluminiumtrihydroxid natriumarm (d) und 2 Gew.-Teilen pyrogen hergestelltem Titandioxid (f) zu einer homogenen Masse verrührt. Die Mischung wurde zunächst auf 100°C erwärmt und 2 Stunden im geschlossenen Dissolver gerührt und danach bei 160°C unter Vakuum von Wasser und überschüssigem Silazan befreit.

Nach Abkühlen der Masse auf 90°C wurden 22 Gew.-Teile eines vinylendgestoppten Polydimethylsiloxangemisches mit einer mittleren Viskosität von 10 Pa.s bei 25°C (a), 4 Gew.-Teile aktiviertes Zinkoxid (f), 22 Gew.-Teile eines Gemisches aus trimethylsilylendblockierten Polyorganosiloxan-Vernetzers mit durchschnittlich 8 Methylhydrogensiloxaneinheiten und 100 Dimethylsiloxaneinheiten pro Molekül (b) und etwa 0,2 Gew.-Teile Ethinylcyclohexanol als Inhibitor (c) zugesetzt. Die so erhaltene Masse wird im folgenden Komponente B genannt.

Je 50 Teile der oben beschriebenen Komponente A und B wurden zusammen verrührt und durch Vulkanisation bei 175°C für 10 Minuten Platten mit einer Dicke von 2 bzw. 6 mm hergestellt. Die Platten wurden anschließend für 4 Stunden bei 200°C im Umluftofen getempert. An den so hergestellten Vulkanisaten wurden die Reaktivität, die mechanischen Eigenschaften sowie Lichtbogenbeständigkeit nach DIN 57 441 und Kriechstromfestigkeit nach IEC Publ, 587 geprüft.

**Tabelle 1**

| | | |
|---|---|---|
| Reaktivität t60 | nach 1 Tag | 3,7 sec. |
| Reaktivität t60 | nach 21 Tagen | 3,9 sec. |
| Reaktivität t60 | nach 183 Tagen | 4,2 sec. |
| Zugfestigkeit | DIN 53 504 S2 | 4,0 N/mm² |
| Dehnung | DIN 53 504 S2 | 600 % |
| Härte Shore A | DIN 53 505 | 40 |
| Lichtbogenbeständigkeit | DIN 57 441 | HL 2 |
| Kriechstromfestigkeit | IEC Publ. 587 | 1 A 3,5 |

## Patentansprüche

1. Additionsvernetzende Siliconkautschukmischungen, bestehend im wesentlichen aus
(a) 20 bis 40 Gew.-% mindestens einem alkenylgruppenhaltigen linearen oder verzweigten Organopolysiloxan mit einem Anteil von 0,0002 bis 3 Gew.-% Alkenylgruppen mit einer Viskosität von 0,1 bis 1 000 Pas, bei 25°C
(b) mindestens einem Hydrogensiloxan mit mindestens 3 SiH-Funktionen pro Molekül in einer Menge, so daß das molare Verhältnis der SiH-Gruppen zu der Gesamtmenge an Si-gebundenen Alkenylgruppen mindestens 2,0:1 beträgt,
(c) 0,01 bis 250 ppm mindestens einem Pt-Katalysator und gegebenenfalls einem Inhibitor,
(d) 35-55 Gew.-% Aluminiumhydroxid, -oxid und/oder deren Mischoxide/hydroxide,
(e) 5 bis 25 Gew.-% mindestens einem, gegebenenfalls oberflächlich modifizierten Füllstoff mit einer spezifischen Oberfläche von 150 bis 500 m²/g
(f) 1 bis 5 Gew.-% mindestens einem Metalloxid des Zinks mit einer BET-Oberfläche von 30 bis 70 m²/g, gegebenenfalls in Kombination mit 0 bis 5 Gew.-% mindestens einem Metalloxid des Titans, mit einer BET-Oberfläche von 35 bis 65 m²/g,
und gegebenenfalls
(g) weiteren Hilfsstoffen, wobei die Summe aller Bestandteile 100 Gew.-% beträgt.

2. Additionsvernetzende Siliconkautschukmischungen nach Anspruch 1, **dadurch gekennzeichnet, daß** das Organopolysiloxan (a) ein Siloxan aus Einheiten der allgemeinen Formel (I)
(R)_{y}SiO_{(4-y)/2} (I)
ist, in denen
R einen einwertigen aliphatischen Rest mit 1 bis 8 Kohlenstoffatomen und einen Alkenylrest mit 2 bis 8 Kohlenstoffatomen bedeutet,
y= 1,95 bis 2,01 ist, und das mindestens 0,0002 bis 5 Gew.-% Alkenylgruppen enthält.

3. Additionsvernetzende Siliconkautschukmischungen nach Anspruch 1 oder 2, **dadurch gekennzeichnet, daß** die Hydrogensiloxane (b) Siloxane aus Einheiten der allgemeinen Formel (II)
(R¹)_{w}(H)_{z}SiO_{(4-w-z)/2} (II)
sind, in denen
R¹ = einwertiger aliphatischer Rest mit 1 bis 8 Kohlenstoffatomen,
w= 0, 1, 2 oder 3,
z = 0, 1 oder 2
und w + z = 0, 1, 2 oder 3 ist,
mit der Maßgabe, daß durchschnittlich mindestens 3 Si-gebundene Wasserstoffatome je Molekül vorliegen.

4. Verfahren zur Herstellung von additionsvernetzenden Siliconkautschukmischungen nach einem oder mehreren der Ansprüche 1 bis 3, **dadurch gekennzeichnet, daß** 1. mindestens ein Organopolysiloxan (a), Katalysator (c), Aluminiumhydroxid (d) und Metalloxid (f), gegebenenfalls Füllstoffe (e) und/oder Hilfsstoffe (g) gemischt und 2. als separate Mischung mindestens ein Organopolysiloxan (a), mindestens ein Hydrogensiloxan (b), und gegebenenfalls Füllstoffe (e) und Aluminiumhydroxid (d) Hilfsstoffe (g) und/oder Inhibitor (c) und Metalloxide (f) vermischt werden, und diese beiden Mischungen erst im Spritzgießautomaten oder in einem vorgelagerten Mischkopf mit anschließendem Statikmischer zusammengeführt werden.

5. Verfahren nach Anspruch 4, **dadurch gekennzeichnet, daß** ein Füllstoff (e) und Aluminiumhydroxid (d) in-situ durch Zugabe von Hexamethyldisilazan und/oder Divinyltetramethyldisilazan und Wasser hydrophobiert werden.

6. Verwendung der additionsvernetzenden Siliconkautschukmischung nach einem oder mehreren der Ansprüche 1 bis 3 zur Herstellung von kriechstrom- und lichtbogenfesten Siliconelastomeren.

## Claims

1. Addition-crosslinking silicone rubber mixtures essentially consisting of
(a) from 20 to 40% by weight of at least one linear or branched organopolysiloxane containing alkenyl groups and having a proportion of from 0.0002 to 3% by weight of alkenyl groups and having a viscosity of from 0.1 to 1000 Pas at 25°C
(b) at least one hydrosiloxane having at least 3 SiH functions per molecule, in an amount such that the molar ratio of the SiH groups to the total amount of Si-bonded alkenyl groups is at least 2.0:1,
(c) from 0.01 to 250 ppm of at least one Pt catalyst and, where appropriate, an inhibitor,
(d) from 35 to 55% by weight of aluminium hydroxide, aluminium oxide and/or mixed oxides/hydroxides comprising these,
(e) from 5 to 25% by weight of at least one, where appropriate surface-modified, filler having a specific surface area of from 150 to 500 m²/g
(f) from 1 to 5% by weight of at least one metallic oxide of zinc having a BET surface area of from 30 to 70 m²/g, where appropriate in combination with from 0 to 5% by weight of at least one metallic oxide of titanium having a BET surface area of from 35 to 65 m²/g,
and where appropriate
(g) other auxiliaries, where the total of all of the constituents is 100% by weight.

2. Addition-crosslinking silicone rubber mixtures according to Claim 1, **characterized in that** the organopolysiloxane (a) is a siloxane made of units of the general formula (I)
(R)_{y}SiO_{(4-y)/2} (I),
in which units
R is a monovalent aliphatic radical having from 1 to 8 carbon atoms and an alkenyl radical having from 2 to 8 carbon atoms,
y = from 1.95 to 2.01, and the organopolysiloxane contains from at least 0.0002 to 5% by weight of alkenyl groups.

3. Addition-crosslinking silicone rubber mixtures according to Claim 1 or 2, **characterized in that** the hydrosiloxanes (b) are siloxanes made of units of the general formula (II)
(R¹)_{w}(H)_{z}SiO_{(4-w-z)/2} (II),
in which units
R¹ = a monovalent aliphatic radical having from 1 to 8 carbon atoms,
w = 0, 1, 2 or 3,
z = 0, 1 or 2
and w + z = 0, 1, 2 or 3,
with the proviso that there is an average of at least 3 Si-bonded hydrogen atoms per molecule.

4. Process for preparing addition-crosslinking silicone rubber mixtures according to one or more of Claims 1 to 3, **characterized in that** 1. at least one organopolysiloxane (a), catalyst (c), aluminium hydroxide (d) and metal oxide (f), and where appropriate fillers (e) and/or auxiliaries (g) are mixed and 2. at least one organopolysiloxane (a), at least one hydrosiloxane (b), and where appropriate fillers (e) and aluminium hydroxide (d) auxiliaries (g) and/or inhibitor (c) and metal oxides (f) are mixed as a separate mixture, and these two mixtures are not brought together until they enter injection moulding machines or an upstream mixing head attached to a static mixer.

5. Process according to Claim 4, **characterized in that** a filler (e) and aluminium hydroxide (d) are hydrophobicized in situ by adding hexamethyldisilazane and/or divinyltetramethyldisilazane and water.

6. Use of the addition-crosslinking silicone rubber mixture according to one or more of Claims 1 to 3 for preparing tracking-resistant and arc-resistant silicone elastomers.

## Revendications

1. Mélanges de caoutchoucs de silicones réticulant par addition, qui consistent essentiellement en
(a) 20 à 40 % en poids d'au moins un organopolysiloxane linéaire ou ramifié contenant des groupes alcényle à raison de 0,0002 à 5 % en poids de groupes alcényle, et ayant une viscosité de 0,1 à 1 000 Pa.s à 25°C,
(b) au moins un hydrogénosiloxane à au moins trois fonctions SiH par molécule en quantité correspondant à un rapport molaire d'au moins 2,0:1 entre les groupes SiH et la quantité totale des groupes alcényle fixés sur le silicium,
(c) 0,01 à 250 ppm d'au moins un catalyseur au platine et le cas échéant d'un inhibiteur,
(d) 35 à 55 % en poids d'hydroxyde, d'oxyde et/ou d'oxyde/hydroxyde mélangé d'aluminium,
(e) 5 à 25 % en poids d'au moins une matière de charge éventuellement modifiée en surface, ayant une surface spécifique de 150 à 500 m²/g,
(f) 1 à 5 % en poids d'au moins un oxyde métallique du zinc ayant une surface BET de 30 à 70 m²/g, éventuellement en combinaison avec 0 à 5 % en poids d'au moins un oxyde métallique du titane ayant une surface BET de 35 à 65 m²/g,
et le cas échéant
(g) d'autres produits auxiliaires, la somme de tous les constituants représentant 100 % en poids.

2. Mélanges de caoutchoucs de silicones réticulant par addition selon la revendication 1, **caractérisés en ce que** l'organopolysiloxane (a) est un siloxane consistant lui-même en motifs de formule générale (I)
(R)ySiO(4y)/2 (I),
dans laquelle
R représente un radical aliphatique monovalent en C₁-C₈ ou un radical alcényle en C₂-C₈,
y est un nombre allant de 1,95 à 2,01,
et qui contient au moins 0,0002 à 5 % en poids de groupes alcényle.

3. Mélanges de caoutchoucs de silicones réticulant par addition selon la revendication 1 ou 2, **caractérisés en ce que** les hydrogénosiloxanes (b) sont des siloxanes qui consistent en motifs de formule générale (II)
(R¹)_{w}(H)_{z}SiO_{(4-w-z)/2} (II),
dans laquelle
R¹ représente un radical aliphatique monovalent en C₁-C₈,
w est un nombre égal à 0, 1, 2 ou 3,
z est un nombre égal à 0,1 ou 2,
et w + z est égal à 0, 1, 2 ou 3,
sous réserve qu'il y a en moyenne au moins 3 atomes d'hydrogène fixés sur le silicium par molécule.

4. Procédé de préparation des mélanges de caoutchoucs de silicones réticulant par addition selon une ou plusieurs des revendications 1 à 3, **caractérisé en ce que** 1. on mélange au moins un organopolysiloxane (a), le catalyseur (c), l'hydroxyde d'aluminium (d) et l'oxyde métallique (f), le cas échéant les matières de charge (e) et/ou les produits auxiliaires (g) et 2. on mélange séparément au moins un organopolysiloxane (a), au moins un hydrogénosiloxane (b) et le cas échéant des matières de charge (e) et l'hydroxyde d'aluminium (d), des produits auxiliaires (g) et/ou l'inhibiteur (c) et les oxydes métalliques (f), et on ne combine ces deux mélanges que dans l'appareil automatique à mouler par injection ou dans une tête de mélange préalable suivie d'un mélangeur statique.

5. Procédé selon la revendication 4, **caractérisé en ce que** l'on hydrofuge une matière de charge (e) et l'hydroxyde d'aluminium (d) in situ par addition d'hexaméthyldisilazane et/ou de divinyltétraméthyldisilazane et d'eau.

6. Utilisation du mélange de caoutchoucs de silicones réticulant par addition selon une ou plusieurs des revendications 1 à 3 pour la fabrication d'élastomères de silicone résistant aux courants de fuite et à l'arc électrique.
